# EUROPEAN PATENT APPLICATION

(11) **EP 3 582 501 A1**
(43) Date of publication of application: **18.12.2019**
(21) Application number: 18305736.3
(22) Date of filing: 15.06.2018
(51) Int. Cl.: H04N 19/176, H04N 19/82

(54) **ADVANCED MERGE PARALLELIZABLE SAO**

(71) Applicant: InterDigital VC Holdings, Inc., Wilmington, Delaware 19809 (US)
(72) Inventor: LELEANNEC, Fabrice, 35576 Cesson-Sévigné (FR); BORDES, Philippe, 35576 Cesson-Sévigné (FR); URBAN, Fabrice, 35576 Cesson-Sévigné (FR)
(74) Representative: Huchet, Anne

(57) **Abstract**

Digital video encoders and decoders using Sample Adaptive Offset filtering can be parallelized to speed operation by assigning an order to SAO candidates in a list to facilitate the parallel operation. The list is reordered such that one thread can be started before another one is completed. In one embodiment, a SAO palette of candidates is modified, such that the performance of the process is minimally impacted but the parallel implementation is realizable, and the memory bandwidth can be reduced.

## Description

### FIELD OF THE INVENTION

The present aspects relate to video compression and video encoding and decoding.

### BACKGROUND OF THE INVENTION

The JVET (Joint Video Exploration Team) is exploring an improved video coding standard, known as H.266, Versatile Video Coding (VVC) or H.266/VCC. H.266 aims to improve upon the performance of HEVC (ITU-T H.265 ISO/IEC 23008-2), High Efficiency Video Coding). In HEVC, when enabled, the Coding Tree Unit (CTU) can be coded with three Sample Adaptive Offset (SAO) modes (*SaoTypeldx*): inactive (OFF), edge offset (EO) or band offset (BO). In case of EO or BO, one set of parameters per channel (Y,U,V) is coded, possibly shared with neighboring CTUs. The SAO mode is the same for Cb and Cr components.

Wavefront parallel processing (WPP) enables parallel encoding and decoding. WPP consists in resetting the CABAC (Context Adaptive Binary Arithmetic Coding) probabilities of the first CTU in each line with the probabilities obtained after processing the second CTU of the line above. Otherwise, all inter-block dependencies are maintained. Thus, parallel encoding and decoding is possible with moderate BD-rate (Bjøntegaard delta rate) degradation because dependencies are not broken. The decoding of a current CTU is delayed by at least two CTUs in order to wait for the merging data of the CTU that is above and to the right to be available along with the decoded data from the CTU above the current CTU.

### SUMMARY OF THE INVENTION

These and other drawbacks and disadvantages of the prior art are addressed by the general aspects, which are directed to embodiments for parallelizable advanced merge sample adaptive offset.

According to a first aspect, there is provided a method. The method comprises steps for encoding a video block using sample adaptive offset (SAO) filtering, wherein encoding comprises: ordering a list of indices of candidate SAO parameter sets; filtering a reconstructed version of said video block using at least one candidate SAO parameter set from the list of indices of candidate SAO parameter sets; and encoding at least one index value corresponding to the at least one candidate SAO parameter set into a bitstream of data for said video block.

According to another aspect, there is provided a second method. The method comprises steps for decoding a bitstream, comprising: parsing the bitstream for at least one index value; ordering a list of indices of candidate sample adaptive offset (SAO) parameter sets based on the at least one index value; and, filtering a decoded video block using the at least one candidate SAO parameter set.

According to another aspect, there is provided an apparatus. The apparatus comprises a memory and a processor. The processor can be configured to encode a block of a video or decode a bitstream by executing the either of the aforementioned methods.

According to another general aspect of at least one embodiment, there is provided a non-transitory computer readable medium containing data content generated according to any of the described encoding embodiments or variants.

According to another general aspect of at least one embodiment, there is provided a signal comprising video data generated according to any of the described encoding embodiments or variants.

According to another general aspect of at least one embodiment, a bitstream is formatted to include data content generated according to any of the described encoding embodiments or variants.

According to another general aspect of at least one embodiment, there is provided a computer program product comprising instructions which, when the program is executed by a computer, cause the computer to carry out any of the described decoding embodiments or variants.

These and other aspects, features and advantages of the general aspects will become apparent from the following detailed description of exemplary embodiments, which is to be read in connection with the accompanying drawings.

### BRIEF DESCRIPTION OF THE DRAWINGS

Figure 1 shows a determination of a reconstructed sample category in case of EO mode.
Figure 2 shows an example of BO mode and the pixel range from 0....255 (in 8-bit) is uniformly split into 32 bands.
Figure 3 shows picture based SAO filtering calling the "SAO filtering process" for each group of samples (left), and "SAO filtering process" (right).
Figure 4 shows CTUs referring to previously encoded list of (NEW) SAO parameters.

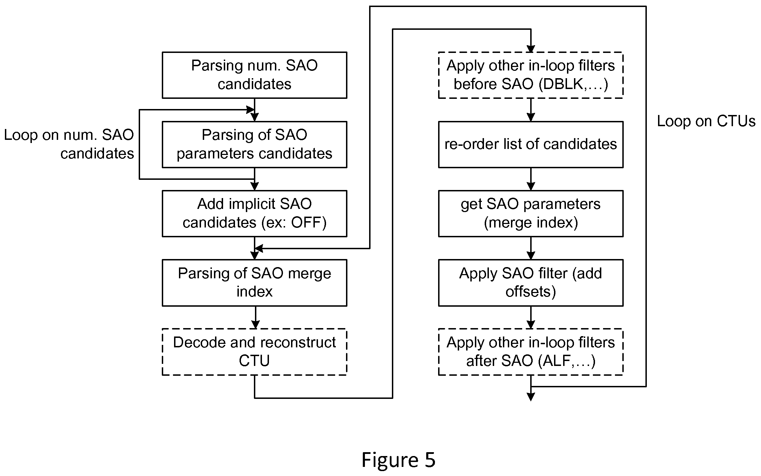

Figure 5 shows an exemplary embodiment of a proposed decoding and reconstructing process of the SAO filter.
Figure 6 shows an example of wavefront paralle processing.
Figure 7 shows an example of single thread decoding of SAO candidates.
Figure 8 shows multiple threads decoding (with wavefront) of SAO candidates.
Figure 9 shows an example of multiple threads decoding (with wavefront) of SAO candidates.
Figure 10 shows the size of the list of SAO candidates limited to 2 for a current Coding Tree Unit.
Figure 11 shows an example of the size of the list being limited by the number of candidates in a neighboring area to the current CTU.
Figure 12 is an embodiment of SAO palette synopsis (left) and proposed variant (right).
Figure 13 shows an embodiment of the building of SAO palette synopsis (left) as described in a related disclosure.
Figure 14 shows an example embodiment of building of SAO palette syntopsis using a proposed method.
Figure 15 shows a generic encoding embodiment to which the present embodiments can be applied.
Figure 16 shows a generic decoding embodiment to which the present embodiments can be applied.
Figure 17 shows a block diagram of an exemplary system in which various aspects and exemplary embodiments are implemented.
Figure 18 shows one embodiment of a method for encoding under the general described aspects.
Figure 19 shows one embodiment of a method for decoding under the general described aspects.
Figure 20 shows one embodiment of an apparatus for encoding or decoding under the general described aspects.

### DETAILED DESCRIPTION

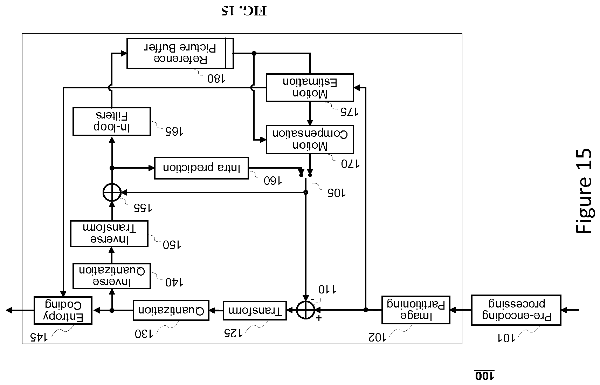

Figure 15 illustrates an exemplary video encoder 100, such as a High Efficiency Video Coding (HEVC) encoder. Figure 15 may also illustrate an encoder in which improvements are made to the HEVC standard or an encoder employing technologies similar to HEVC, such as a JEM (Joint Exploration Model) encoder under development by JVET (Joint Video Exploration Team).

An in-loop filter (165 in Figure 15) is applied to the reconstructed picture, for example, to perform deblocking/SAO (Sample Adaptive Offset) filtering to reduce coding artifacts. The filtered picture may be stored in a reference picture buffer (180) and used as reference for other pictures.

In HEVC, SAO filtering may be activated or de-activated at video level, slice level and CTB (Coding Tree Block) level. Two SAO modes are specified: edge offset (EO) and band offset (BO). For EO, the sample classification is based on local directional structures in the picture to be filtered. For BO, the sample classification is based on sample values. The parameters for EO or BO may be explicitly coded or derived from candidates in the neighborhood (merge up or merge left). SAO can be applied to the luma and chroma components, where the SAO mode is the same for Cb and Cr components. The SAO parameters are configured individually for each color component. More precisely, a set of SAO parameters (i.e. the offsets, the SAO types EO, BO and inactivated, the class in case of EO and the band position in case of BO) can be encoded at a CTU level.

In the case where SAO filtering is activated for a CTB, the samples in the CTB are categorized into NC categories, e.g. NC=5 in HEVC. For sample s in category c(s), the sample can be adjusted to s = s + off(c(s)), where off(n) is the offset value of category n. In HEVC, the offsets values of only 4 (=NC-1) categories are decoded from the bitstream, the other offset values being set to 0. For BO, absolute offset values and signs are decoded. For EO, only absolute offset values are decoded, the signs being inferred from the category (positive sign for categories 1 and 2, and negative sign for categories 3 and 4).

The plurality of candidate sets of filter parameters can be determined on the fly by Rate-Distortion Optimization known as RDO from the content of the picture. In this case, the different variants (e.g. re-ordering of the candidate sets in the list) disclosed for the decoding method also apply when determining the coding rate. To this aim, the list of candidate sets resulting in the best rate-distortion trade-off can be selected. In a particular embodiment, the list of candidate sets comprises a specific candidate set of filter parameters known as the OFF candidate set. As an example, the OFF candidate can be placed at a predefined position, e.g. the second position, in the list of candidate sets.

An index is also determined for each block of the picture part, said index identifying one candidate set among the plurality of candidate sets to be used for filtering the block. The index may also be determined by RDO. In case of re-ordering of the list of candidate sets, the determination of the index can be done after the list re-ordering.

The present embodiments are related to in-loop filtering using Sample Adaptive Offset (SAO) using "advance merge" (also known as SAO palette), for example, as described in EP 17305626.8 and EP 17305627.6. SAO allows adding offsets to some categories of reconstructed samples to reduce coding artifacts.

In HEVC, when enabled, the Coding Tree Unit (CTU) can be coded with 3 SAO modes (*SaoTypeldx*): inactive (OFF), edge offset (EO) or band offset (BO). In case of EO or BO, one set of parameters per channel (Y,U,V) is coded, possibly shared with neighboring CTUs (see SAO MERGE flag). The SAO mode is the same for Cb and Cr components.

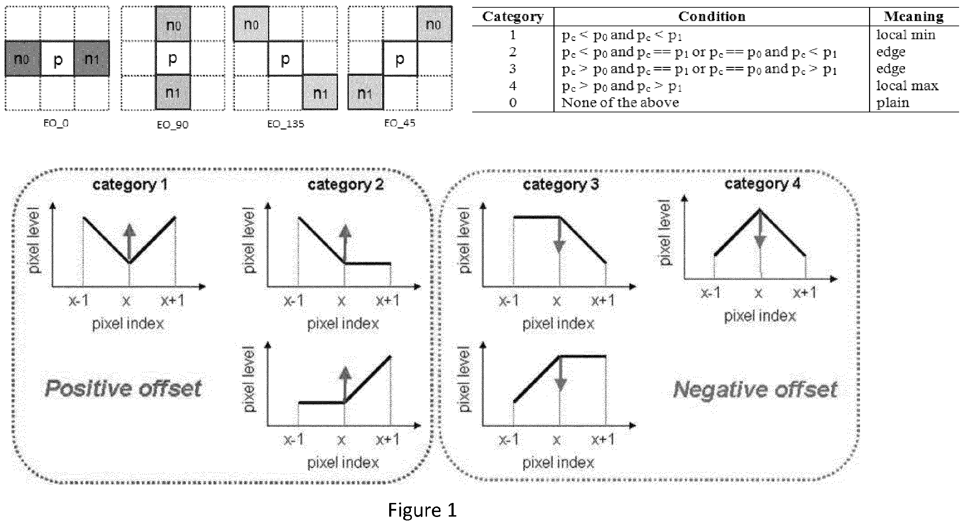

In case of EO, each reconstructed sample is classified into NC=5 categories (*sao_eo_class*)*,* depending on the local gradients, as depicted in Figure 1 (NC-1) offset values are coded, one for each category (one category has offset equal to zero).

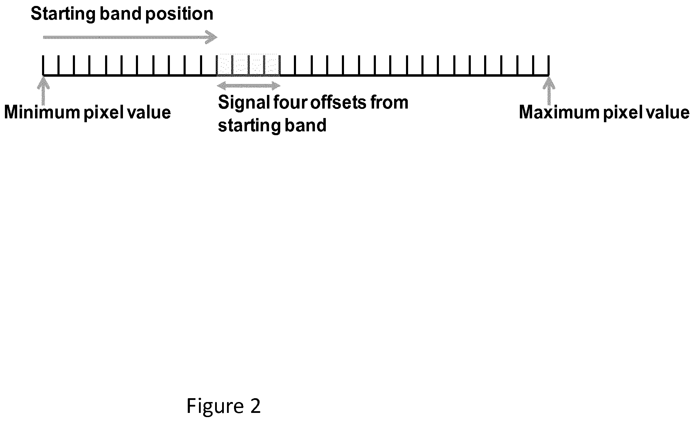

In case of BO, the pixel range of values (ex: 0..255, in 8-bit) is uniformly split into 32 bands and the sample values belonging to (NC-1)=4 consecutive bands are modified by adding an offset, *off(n).* Figure 2 shows an example of 4 consecutive bands. (NC-1) offset values are coded, one for each of the (NC-1) bands (the remaining bands has offset equal to zero).

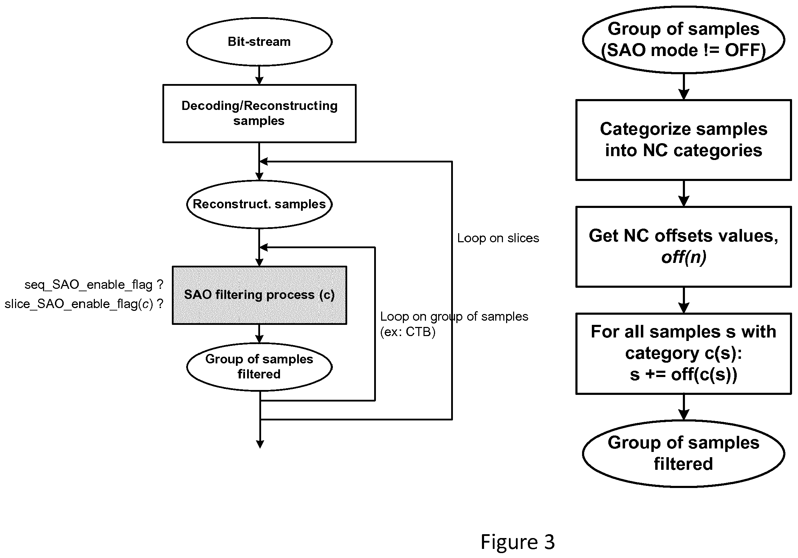

In case of EO or BO, the offsets are possibly not coded but copied from the neighboring above or left CTU (Merge mode). Figure 3 depicts the way SAO is processed over the picture (left) and the SAO filtering process itself for each CTU (right).

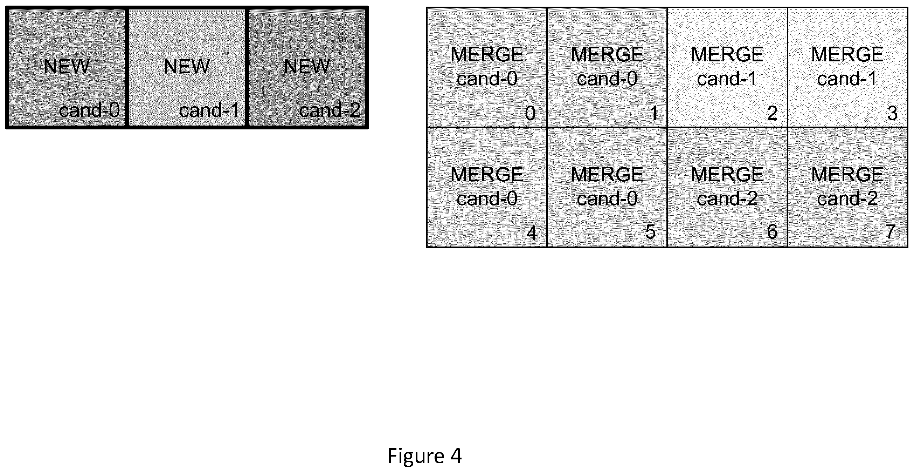

In EP 17305626.8, all the SAO parameters (list of SAO parameters candidates) are encoded first and then all the CTUs refer to a (merge/candidate) index of this list of SAO parameters (NEW Candidates) which have been previously defined and encoded as depicted in Figure 4.

The number of SAO candidates (nb_sao_cand) and the list of SAO parameters is encoded in the same order as the order of use. At the encoder, the list of SAO parameters candidates is re-ordered after encoding each candidate index, putting the last used parameter on top of the list. More precisely, the list of candidates is re-ordered such that the spatially closest used candidates are ordered at first. This can be done by building a map of last used candidates.

The OFF (all offsets are zero for all components) candidate is placed implicitly in the list, but not explicitly coded, at a position not too far from to the top (ex: position <= 2).

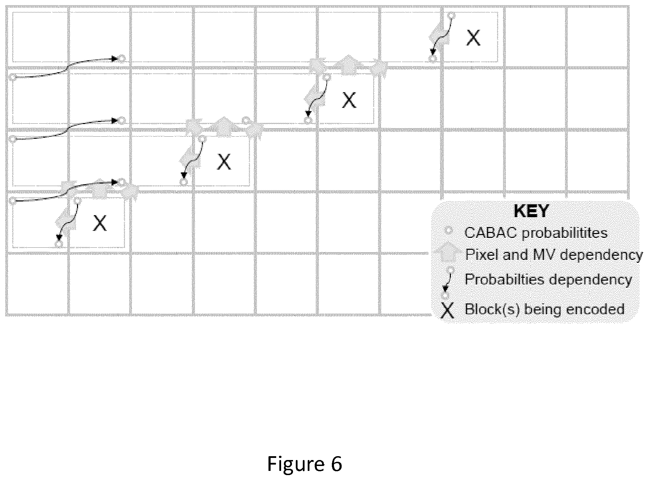

The wavefront parallel processing (WPP) enables parallel encoding and decoding (Figure 6). WPP consists in resetting the CABAC probabilities of the first CTU in each line with the probabilities obtained after processing the second CTU of the line above. Otherwise, all inter-block dependencies are maintained. Thus, parallel encoding and decoding is possible with moderate BD-rate degradation because dependencies are not broken. However, the decoding of the CTU of one row should be delayed by at least two CTUs in order to wait for the above-right CTU to be available for merging data with the above decoded CTU data (ex: AMVP, intra prediction, SAO merge,...). CABAC encoding is flushed after the last CTU of each row, making the bitstream representing each row of CTU accessible using an entry point defined in the slice header. Thus, it is possible to use any number of cores between one and the number of CTU rows in the frame in the decoder or in the encoder.

One interesting feature of WPP is that it is possible to convert a non-parallel compressed video to and from a parallel-friendly one (this is simply an entropy level operation), because dependencies are not broken.

Note that one thread may decode one row of a CTU faster so that it can be in advance of the row below by more than two CTUs. For wavefront to work correctly, the thread below should be delayed by at least two CTUs. In the remaining discussion, it is assumed that the thread below is delayed by two CTUs.

When implementing the decoding process, it is desirable to have parallelizable workflows to speed up the decoding process. Practically, it is also preferred to target multi-core platforms rather than targeting one single core, because on one hand they are cheaper and on the other hand one single core capable of processing all the calculations in one time-frame period would need significantly more processing power capability. Additionally, it is also preferable to design a decoding scheme with minimal memory bandwidth requirements since random access memory generally requires costly caching tools.

In one embodiment, it is proposed to modify an SAO palette of candidates, such that the performance of the process is practically not impacted but the parallel implementation is possible and the memory bandwidth can be reduced.

The list of SAO parameters in the SAO palette can be re-ordered before filtering with SAO, such that the spatially closest candidates are ordered first. However, in the case of wavefront parallel processing, one can start decoding one row of a CTU as soon as the CTU situated at the row above and to the right (top-right) has finished decoding as depicted in Figure 6.

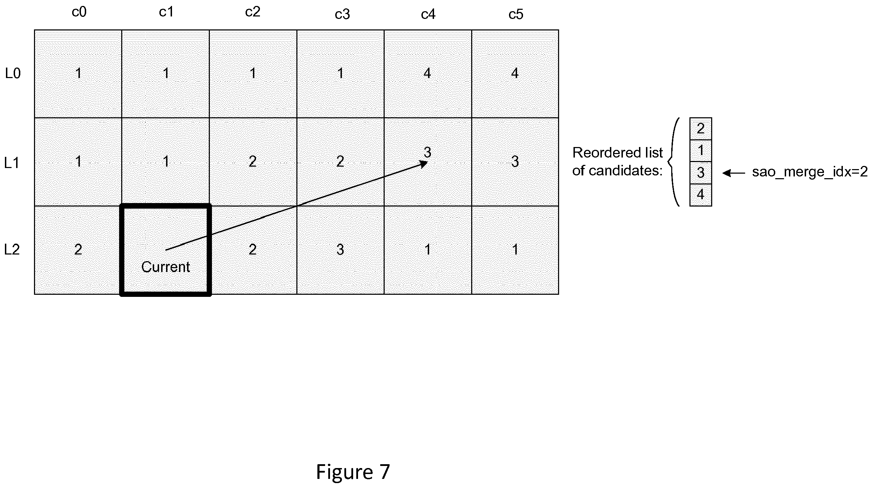

In the example depicted in Figure 7, the decoding is single thread and the current CTU is situated at position (c1;L2). The list of SAO palette candidates has been re-ordered so that the spatially closest already decoded SAO candidates appear on top of the list (first) and the not yet used candidates are on the bottom (last). In this example, the re-ordered list of candidates is {2,1,3,4} and the value of sao_merge_idx is equal to 2 corresponding to the SAO candidate labelled as "3" in Figure 7.

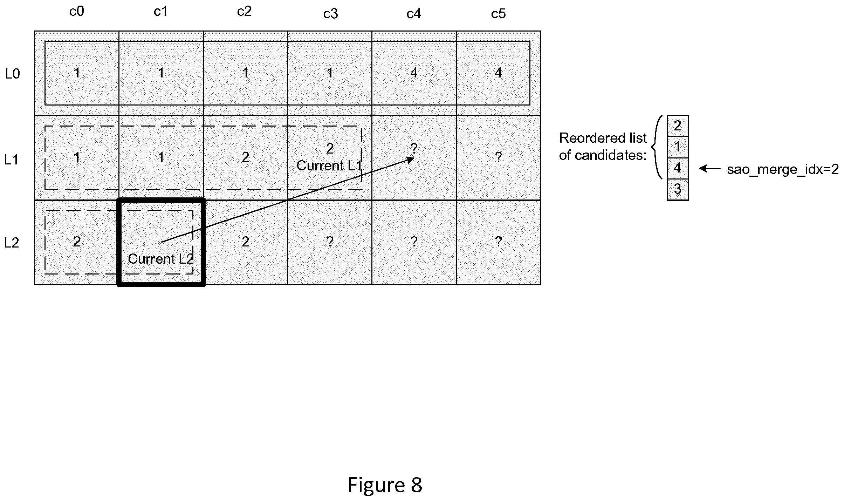

In another related example depicted in Figure 8, the bitstream has been converted into a parallel stream and the decoding is now multiple thread with wavefront parallelization enabled, with one thread per row. The first, second and third threads are decoding CTUs at position (c5;L0), (c3;L1), (c1;L2) respectively. Then the CTU situated at position (c1;L2) has re-ordered the list of available candidates that is {2,1,4,3} (in this example, label 3 is at the end of the list because it has not been used by any thread yet) and the value of sao_merge_idx that is equal to 2 corresponds to the SAO candidate labelled as "4" that is different from the single stream case of Figure 7.

In the following embodiments, ordering or re-ordering a list of SAO candidates can mean favoring some candidates over other candidates. It can also mean including some SAO candidates and not including others. The order of the candidates can be used such that those candidates in a particular position are first used when performing operations, such as SAO filtering.

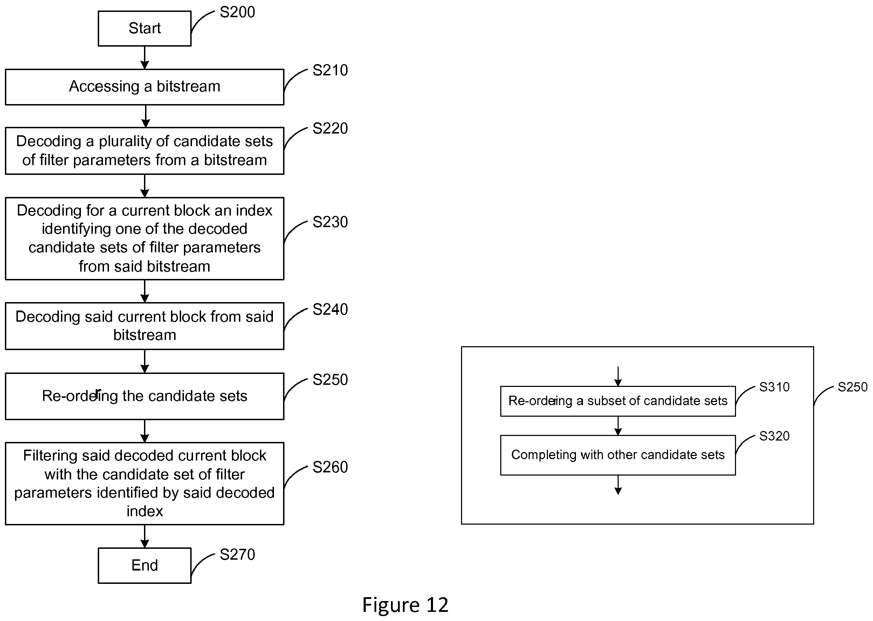

Figure 12 shows one embodiment of an SAO palette synopsis method. The method comprises Start block S200 and control proceeds to block S210 for Accessing a bitstream. Control proceeds from block S210 to block S220 for decoding a plurality of candidate sets of filter parameters from a bitstream. Control proceeds from block S220 to block S23o for decoding for a current block an index identifying one of the decoded candidate sets of filter parameters from the bitstream. Control proceeds from block S230 to block S240 for decoding the current block from the bitstream. Control proceeds from block S240 to block S250 for re-ordering the candidate sets. Control proceeds from block S250 to block S260 for filtering the decoded current block with the candidate set of filter parameters identified by the decoded index. The method ends after control proceeds from block S260 to block S270.

In a variant, block S250 can be comprised of steps S310 for reordering a subset of candidate sets followed by step S320 for completing with other candidate sets.

To avoid the issue presented above, a first embodiment proposes to constrain the SAO palette re-ordering to consider only the (wavefront) causal part (S310 of Figure 12) corresponding to the area delimited with the dashed line in Figure 8, which corresponds to the wavefront region associated with the current CTU {2,1}, and mark the other candidates {4} as "not already used" or "considered as not already used", so that they will be placed at the end of the list (S320 of Figure 12).

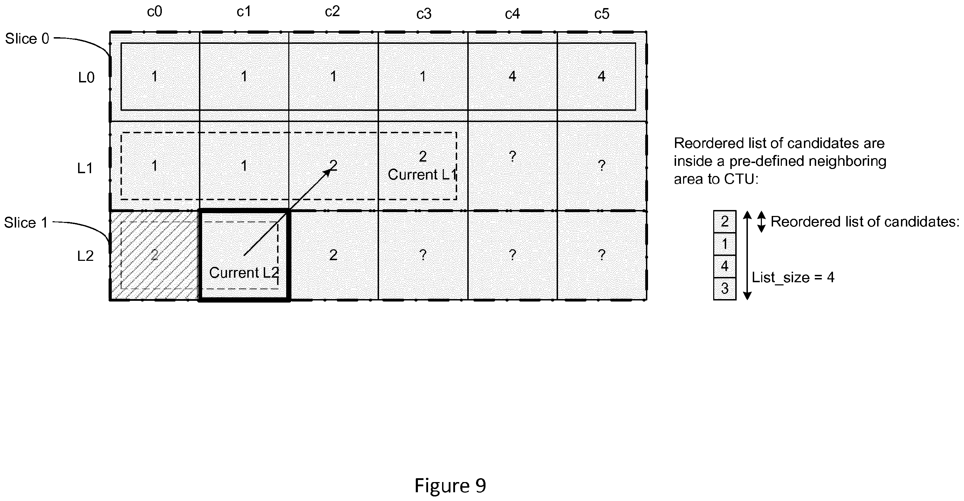

In a second embodiment, the area of consideration for candidates is limited to the current slice and/or the current tile. Advantageously, the area is the intersection between the current slice or the current tile and the wavefront area as described in embodiment 1. For example, in Figure 9, slice 0 includes L0-L1, c0-c5, and slice 1 includes L2, c0-c5. The current CTU is in slice 1 and only labels in slice 1 ({2}) are re-ordered, the others labels not in the current slice (and not in the previous slice) are marked as "not already used" and they are put at the end of the list.

In a variant of this embodiment, the SAO palette is defined per slice or tile, not per picture. Then one list of candidates is coded per slice or tile.

In another variant of this embodiment, one defines two regions: one where SAO-palette re-ordering apply (as in the first embodiment), and another region where the labels are taken to complete the list up to the size of the list, list_size. In a variant, the list_size is not coded but is set as the number of distinct labels in the second region.

In a third embodiment, the size of the re-ordered list of candidates (S310 of Figure 12) is limited to a value "list_reordered_size" that is:
- inferior or equal to the maximum number of candidates in the SAO palette,
- and/or less than or equal to the current number of already used candidates.

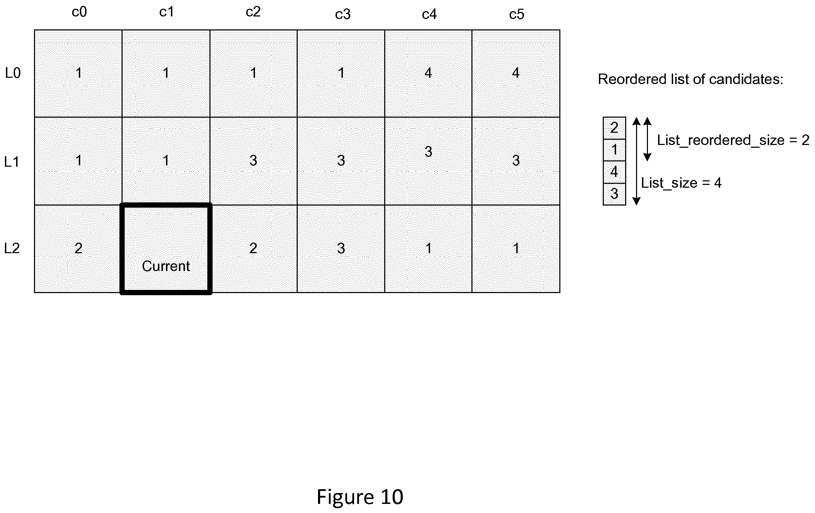

In the example depicted in Figure 10, the value of "list_reordered_size" is 2 and the re-ordered candidates are {2,1}.

Advantageously, the value of "list_reordered_size" can be a-priori known by the decoder (ex: list_reordered_size=4) or can be encoded in high level syntax, for example, in the slice header, picture header (eg., Picture Parameter Set, PPS) or sequence header (eg., Sequence Parameter Set, SPS).

In a variant, the list of SAO candidates is completed (up to "list_size") by the other SAO candidates {4,3} (S320) that were parsed before, in their order of parsing in the bitstream.

The value of "list_size" can be less than or equal to the maximum number of candidates in the SAO palette. It can be known a-priori or encoded explicitly in the bitstream.

The encoding of "list_reordered_size" or "list_size" can be done using the value of SAO-palette-size (nb_sao_cand), which is the number of SAO candidates. For example, one can encode a syntax element diff_num = nb_sao_cand - list_size and derive the value of list_size from diff_num and nb_sao_cand.

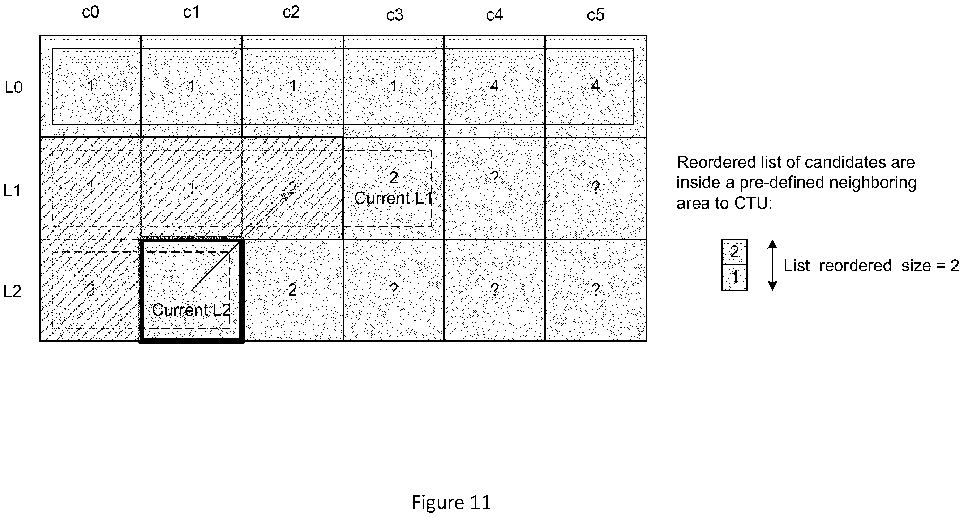

In a fourth embodiment, the size of the list is limited by the maximum distance (dist_max) of the candidates to the current CTU. In the example depicted in Figure 11, the value of dist_max allows defining a neighboring area (hatched area) of previously decoded CTUs (causal) from which the list of re-ordered SAO candidates is built (S310).

In a variant, the other SAO palette candidates (out of the neighboring area) are placed at the end of the list (S320). In another variant, the neighboring area corresponds to a pattern that is known a-priori or encoded in the bitstream.

In another variant, the second and third embodiments are combined so that the number of re-reordered candidates is less than or equal to "list_reordered_size" and all the re-reordered candidates are situated in the pre-defined neighboring area.

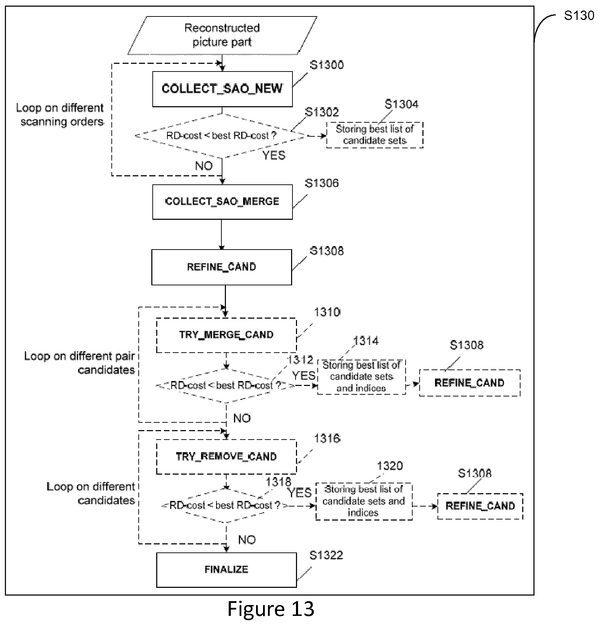

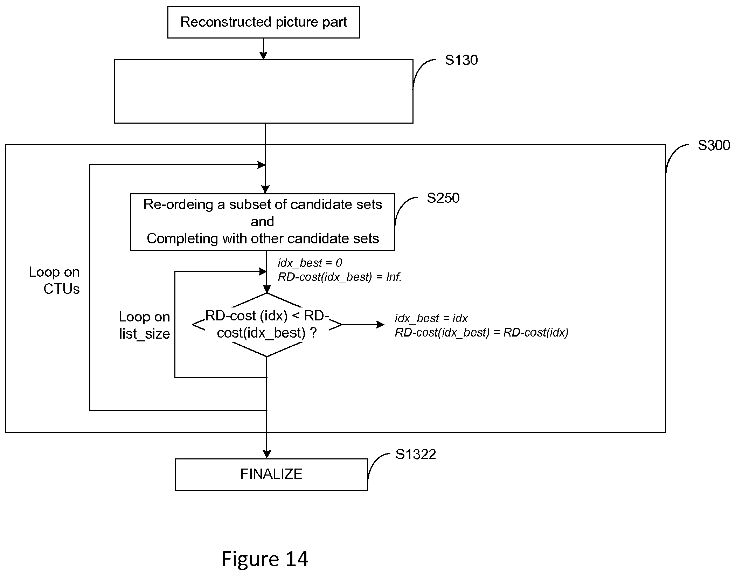

In a prior method, it is proposed to build the SAO palette where the list of candidates "list_size" is equal to "nb_sao_cand". The different steps are depicted as S130 of Figure 13. A fifth embodiment proposes to modify this method by adding the steps of S300 as depicted in Figure 14.

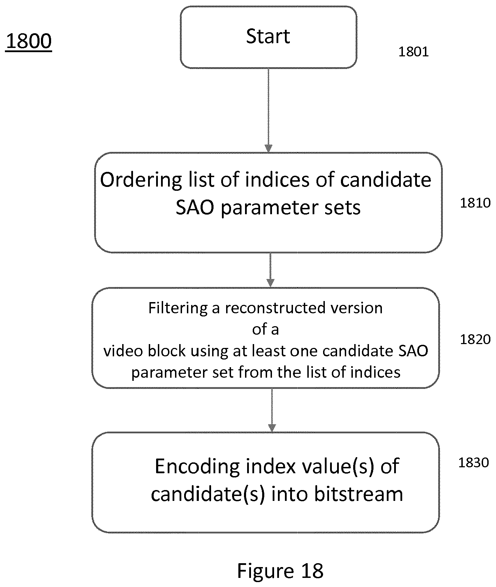

Figure 18 shows one embodiment of a method 1800 for encoding a video block using sample adaptive offset (SAO) filtering. The method commences at Start block 1801 and control proceeds to block 1810 for ordering a list of indices of candidate SAO parameter sets. Control proceeds from block 1810 to block 1820 for filtering a reconstructed version of the video block using at least one candidate SAO parameter set from the list of indices. Control proceeds from block 1820 to block 1830 for encoding at least one index value corresponding to the at least one SAO candidate into a bitstream of data for the video block.

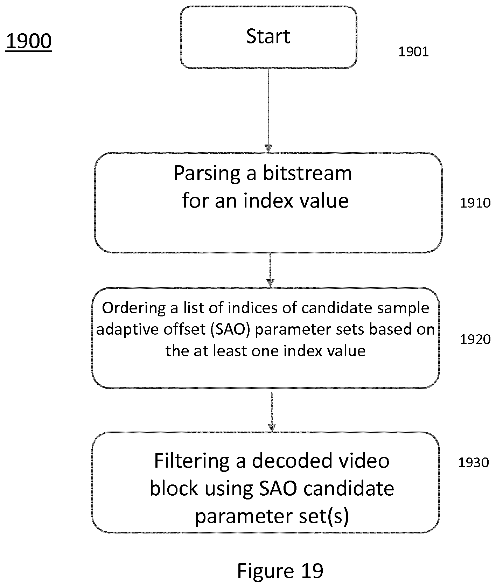

Figure 19 shows one embodiment of a method 1900 for decoding a bitstream. The method commences at Start block 1901 and control proceeds to block 1910 for parsing the bitstream for an index value. Control then proceeds from block 1910 to block 1920 for ordering a list of indices of candidate sample adaptive offset (SAO) parameter sets based on the at least one index value. Control proceeds from block 1920 to block 1930 for filtering a decoded video block using the at least one candidate SAO parameter set.

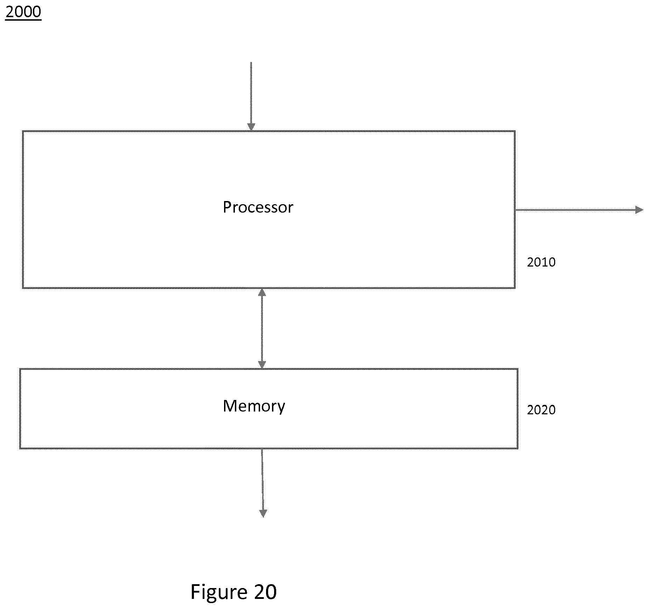

Figure 20 shows one embodiment of an apparatus 2000 for encoding a video block using sample adaptive offset (SAO) filtering or decoding a bitstream. The apparatus comprises Processor 2010 having one or more input and output ports and is interconnected through one or more communication ports to Memory 2020. Apparatus 2000 is capable of performing either of the methods of Figure 18 or Figure 19 or any variant.

The described embodiments herein allow improving the performance of the overall video compression. This is achieved through the improvement of the in-loop SAO filtering.

The proposed modifications to the state-of-art SAO filter, as it exists in the HEVC standard, re-use most of the current SAO block-level logic/operations. Consequently, the existing design of HEVC codec can be maximally reused, thereby reducing the implementation costs of the proposed embodiments. The proposed adaptations support parallel decoding (wavefront) and the memory bandwidth can be reduced since the CTUs access a subset of SAO palette candidates.

The proposed techniques can be implemented by a corresponding decoder.

This document describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well. The various embodiments described and their variants can be combined for encoding and decoding.

The aspects described and contemplated in this document can be implemented in many different forms. FIGs. 15, 16 and 17 below provide some embodiments, but other embodiments are contemplated and the discussion of FIGs. 15, 16 and 17 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably. Usually, but not necessarily, the term "reconstructed" is used at the encoder side while "decoded" is used at the decoder side.

Various methods are described above, and each of the methods comprises one or more steps or actions for achieving the described method. Unless a specific order of steps or actions is required for proper operation of the method, the order and/or use of specific steps and/or actions may be modified or combined.

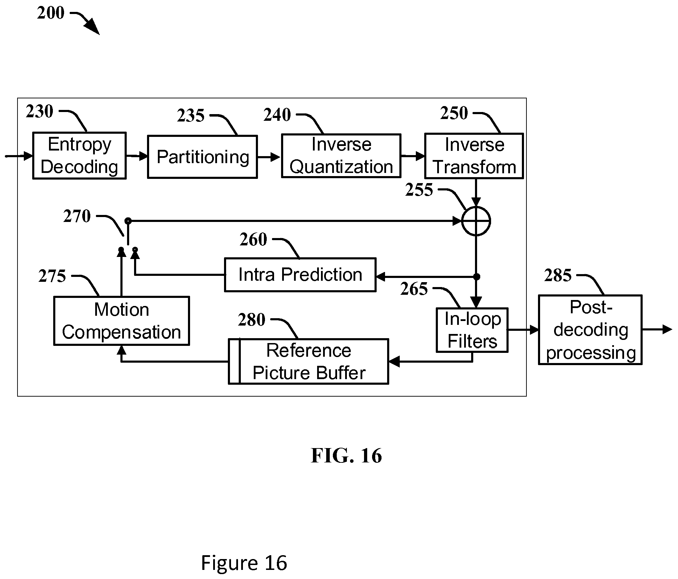

Various methods and other aspects described in this document can be used to modify modules, such as, for example, the intra prediction, entropy coding, and/or decoding modules (160, 360, 145, 330), of a video encoder 100 and decoder 200 as shown in FIG. 15 and FIG. 16, or as provided in other JVET or HEVC (for example) encoders and/or decoders. Moreover, the present aspects are not limited to JVET or HEVC, and can be applied, for example, to other standards and recommendations, whether pre-existing or future-developed, and extensions of any such standards and recommendations (including JVET and HEVC). Unless indicated otherwise, or technically precluded, the aspects described in this document can be used individually or in combination.

Various numeric values used in the present document are for exemplary purposes and the aspects described are not limited to these specific values.

FIG. 15 illustrates an exemplary encoder 100. Variations of this encoder 100 are contemplated, but the encoder 100 is described below for purposes of clarity without describing all expected variations.

Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing, and attached to the bitstream.

In the exemplary encoder 100, a picture is encoded by the encoder elements as described below. The picture to be encoded is partitioned (102) and processed in units of, for example, CUs. Each unit is encoded using, for example, either an intra or inter mode. When a unit is encoded in an intra mode, it performs intra prediction (160). In an inter mode, motion estimation (175) and compensatio101 n (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking/SAO (Sample Adaptive Offset) filtering to reduce encoding artifacts. The filtered image is stored at a reference picture buffer (180).

FIG. 16 illustrates a block diagram of an exemplary video decoder 200. In the exemplary decoder 200, a bitstream is decoded by the decoder elements as described below. Video decoder 200 generally performs a decoding pass reciprocal to the encoding pass as described in FIG. 15. The encoder 100 also generally performs video decoding as part of encoding video data.

In particular, the input of the decoder includes a video bitstream, which can be generated by video encoder 100. The bitstream is first entropy decoded (230) to obtain transform coefficients, motion vectors, and other coded information. The picture partition information indicates how the picture is partitioned. The decoder may therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280).

The decoded picture can further go through post-decoding processing (285), for example, an inverse color transform (e.g. conversion from YCbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

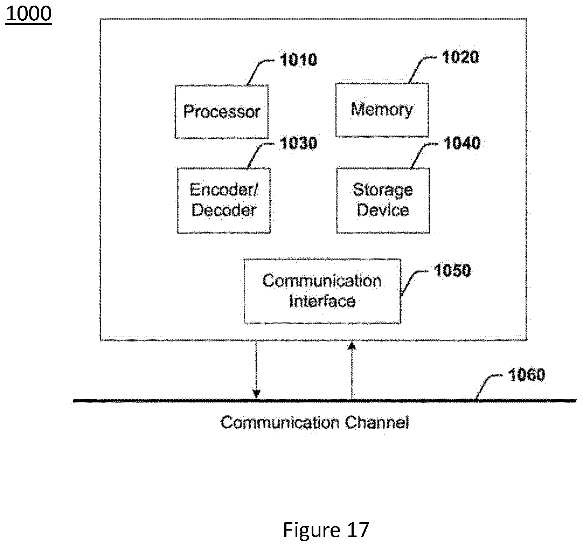

Figure 17 illustrates a block diagram of an exemplary system in which various aspects and exemplary embodiments are implemented. System 1000 can be embodied as a device including the various components described below and is configured to perform one or more of the aspects described in this document. Examples of such devices, include, but are not limited to, personal computers, laptop computers, smartphones, tablet computers, digital multimedia set top boxes, digital television receivers, personal video recording systems, connected home appliances, and servers. System 1000 can be communicatively coupled to other similar systems, and to a display via a communication channel as shown in FIG. 17 and as known by those skilled in the art to implement the various aspects described in this document.

The system 1000 can include at least one processor 1010 configured to execute instructions loaded therein for implementing the various aspects described in this document. Processor 1010 can include embedded memory, input output interface, and various other circuitries as known in the art. The system 1000 can include at least one memory 1020 (e.g., a volatile memory device, a non-volatile memory device). System 1000 can include a storage device 1020, which can include non-volatile memory, including, but not limited to, EEPROM, ROM, PROM, RAM, DRAM, SRAM, flash, magnetic disk drive, and/or optical disk drive. The storage device 1040 can include an internal storage device, an attached storage device, and/or a network accessible storage device, as non-limiting examples. System 1000 can include an encoder/decoder module 1030 configured to process data to provide an encoded video or decoded video.

Encoder/decoder module 1030 represents the module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processors 1010 as a combination of hardware and software as known to those skilled in the art.

Program code to be loaded onto processors 1010 to perform the various aspects described in this document can be stored in storage device 1040 and subsequently loaded onto memory 1020 for execution by processors 1010. In accordance with the exemplary embodiments, one or more of the processor(s) 1010, memory 1020, storage device 1040, and encoder/decoder module 1030 can store one or more of the various items during the performance of the processes described in this document, including, but not limited to the input video, the decoded video, the bitstream, equations, formulas, matrices, variables, operations, and operational logic.

In several embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, HEVC, or VVC (Versatile Video Coding).

The system 1000 can include communication interface 1050 that enables communication with other devices via communication channel 1060. The communication interface 1050 can include, but is not limited to, a transceiver configured to transmit and receive data from communication channel 1060. The communication interface can include, but is not limited to, a modem or network card and the communication channel can be implemented within a wired and/or a wireless medium. The various components of system 1000 can be connected or communicatively coupled together using various suitable connections, including, but not limited to internal buses, wires, and printed circuit boards.

The external memory can be the memory 1020 and/or the storage device 1040, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, HEVC, or VVC (Versatile Video Coding).

The input to the elements of system 1000 can be provided through various input devices as indicated in block 1130. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 1130 have associated respective input processing elements as known in the art. For example, the RF portion can be associated with elements necessary for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface ICs or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1000 can be provided within an integrated housing, Within the integrated housing, the various elements can be interconnected and transmit data therebetween using suitable connection arrangement, for example, an internal bus as known in the art, including the I2C bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed to the system 1000, in various embodiments, using a Wi-Fi network such as IEEE 802.11. The Wi-Fi signal of these embodiments is received over the communications channel 1060 and the communications interface 1050 which are adapted for Wi-Fi communications. The communications channel 1060 of these embodiments is typically connected to an access point or router that provides access to outside networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130.

The system 1000 can provide an output signal to various output devices, including a display 1100, speakers 1110, and other peripheral devices 1120. The other peripheral devices 1120 include, in various examples of embodiments, one or more of a stand-alone DVR, a disk player, a stereo system, a lighting system, and other devices that provide a function based on the output of the system 1000. In various embodiments, control signals are communicated between the system 1000 and the display 1100, speakers 1110, or other peripheral devices 1120 using signaling such as AV.Link, CEC, or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder such as, for example, entropy decoding, inverse quantization, inverse transformation, and differential decoding.Various other generalized, as well as particularized, inventions and claims are also supported and contemplated throughout this description.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder such as, for example, partitioning, differential encoding, transformation, quantization, and entropy encoding.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this document are not necessarily all referring to the same embodiment.

Additionally, this document may refer to "determining" various pieces of information. Determining the information can include one or more of, for example, estimating the information, calculating the information, predicting the information, or retrieving the information from memory.

Further, this document may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this document may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

## Claims

1. A method, comprising:
encoding a video block using sample adaptive offset (SAO) filtering, wherein encoding comprises:
ordering a list of indices of candidate SAO parameter sets;
filtering a reconstructed version of said video block using at least one candidate SAO parameter set from the list of indices of candidate SAO parameter sets; and
encoding at least one index value corresponding to the at least one candidate SAO parameter set into a bitstream of data for said video block.

2. An apparatus for encoding a video block, comprising:
a memory, and
a processor, configured to:
encode a video block using sample adaptive offset (SAO) filtering, wherein encoding comprises:
ordering a list of indices of candidate SAO parameter sets;
filtering a reconstructed version of said video block using at least one candidate SAO parameter set from the list of indices of candidate SAO parameter sets; and
encoding at least one index value corresponding to the at least one candidate SAO parameter set into a bitstream of data for said video block.

3. A method, comprising:
decoding a bitstream, comprising:
parsing the bitstream for at least one index value;
ordering a list of indices of candidate sample adaptive offset (SAO) parameter sets based on the at least one index value; and,
filtering a decoded video block using the at least one candidate SAO parameter set.

4. An apparatus for decoding a video block, comprising:
a memory, and
a processor, configured to:
decode a bitstream, comprising:
parsing the bitstream for at least one index value;
ordering a list of indices of candidate sample adaptive offset (SAO) parameter sets based on the at least one index value; and,
filtering a decoded video block using the at least one candidate SAO parameter set.

5. The method of Claim 1 or 3 or the apparatus of Claim 2 or 4, wherein a size of an ordered list of indices of candidate SAO parameter sets is limited.

6. The method of Claim 1 or 3 or the apparatus of Claim 2 or 4, wherein a size of an ordered list of indices of candidate SAO parameter sets is known a priori.

7. The method of Claim 1 or 3 or the apparatus of Claim 2 or 4, wherein a size of an ordered list of indices of candidate SAO parameter sets is encoded in a high-level syntax element.

8. The method of Claim 1 or 3 or the apparatus of Claim 2 or 4, wherein the list of indices of candidate SAO parameter sets is ordered such that candidates obtained from causal blocks are favored.

9. The method of Claim 1 or 3 or the apparatus of Claim 2 or 4, wherein the list of indices of candidate SAO parameter sets is obtained from a group of blocks that include said video block.

10. The method of Claim 1 or 3 or the apparatus of Claim 2 or 4, wherein a size of an ordered list of indices of candidate SAO parameter sets is limited by a distance between a SAO candidate and a group of blocks that include said video block.

11. The method of Claim 1 or 3 or the apparatus of Claim 2 or 4, wherein the list of indices of candidate SAO parameter sets is ordered and then supplemented with additional candidate indices.

12. A device comprising:
an apparatus according to any of claims 3 through 11; and
at least one of (i) an antenna configured to receive a signal over the air, the signal including the video block, (ii) a band limiter configured to limit the received signal to a band of frequencies that includes the video block, or (iii) a display configured to display an output.

13. A non-transitory computer readable medium containing data content generated according to the method of any one of claims 1 and 5 to 12, or by the apparatus of any one of claims 2 and 5 to 12, for playback using a processor.

14. A signal comprising video data generated according to the method of any one of claims 1 and 5 to 12, or by the apparatus of any one of claims 2 and 5 to 12, for playback using a processor.

15. A computer program product comprising instructions which, when the program is executed by a computer, cause the computer to carry out the method of any one of claims 3 and 5 to 12.
